## Europäisches Patentamt

## European Patent Office

## Office européen des brevets

(19)

(11) Veröffentlichungsnummer: **0 224 774**
**B1**

(12) **EUROPÄISCHE PATENTSCHRIFT**

(45) Veröffentlichungstag der Patentschrift:
09.05.90

(51) Int. Cl.⁵: **F16N 25/02**

(21) Anmeldenummer: **86115805.3**

(22) Anmeldetag: **13.11.86**

(54) **Progressiv-Verteiler für Schmiermittel.**

(30) Priorität: **04.12.85 DE 3542934**

(43) Veröffentlichungstag der Anmeldung:
**10.06.87 Patentblatt 87/24**

(45) Bekanntmachung des Hinweises auf die Patenterteilung:
**09.05.90 Patentblatt 90/19**

(84) Benannte Vertragsstaaten:
**DE ES FR GB IT**

(56) Entgegenhaltungen:
**DE-A- 1 902 587**
**DE-A- 3 412 836**
**DE-C- 2 917 863**
**DE-U- 7 226 041**
**DE-U- 7 332 009**
**DE-U- 8 413 228**
**US-A- 3 337 003**
**US-A- 3 371 745**

(73) Patentinhaber: **Joseph Vögele AG, Neckarauer Strasse 168-228, D-6800 Mannheim 1(DE)**

(72) Erfinder: **Saam, Werner, Dipl.-Ing., Goethestrasse 26, D-6839 Oberhausen-Rheinhausen(DE)**

(74) Vertreter: **Patentanwälte Grünecker, Kinkeldey, Stockmair & Partner, Maximilianstrasse 58, D-8000 München 22(DE)**

ACTORUM AG

## Beschreibung

Die Erfindung betrifft einen Progressiv-Verteiler der im Gattungsbegriff des Patentanspruchs 1 angegebenen Art.

Bei einem aus dem DE-GM 72 26 041 bekannten Progressiv-Verteiler dieser Art fallen konstruktionsbedingt wegen der Anordnung der Zylinderkammern in einer gemeinsamen Ebene des Verteilers Kanäle zwischen der jeweils ersten und letzten Zylinderkammer lang aus. Vor allem, wenn mehrere Zylinderkammer, z.B. sechs angeordnet sind, treten, insbesondere bei Lufteinschlüssen, Störungen bei der Schmiermittelabgabe auf, da das begrenzte Dosiervolumen der Dosierkammer nicht mehr ausreicht, das im langen Kanal befindliche Schmiermittelvolumen zuverlässig zu verdrängen. Bei der pulsierenden Schmiermittelbeaufschlagung wird das Schmiermittel im Kanal praktisch nur mehr hin- und herbewegt, ohne zum Abgabeauslaß zu gelangen. Abgesehen davon, daß an diesem Abgabeauslaß angeschlossene Schmierstellen oder weitere Progressiv-Verteiler nicht mehr versorgt werden, neigt dann Schmiermittel mit hoher Penetration zum Verhärten oder zum Ausbluten, wodurch schließlich der Durchflußwiderstand ansteigt und der Progressiv-Verteiler blockiert. Die Selbstreinigung bei einem Schmiermittelwechsel ist unbefriedigend; eingeschlossene Luft wird nicht mehr verdrängt und beeinflußt die Verteilgenauigkeit des Schmiermittels auf die einzelnen Auslässe in zunehmendem Maß.

Die gleichen Nachteile sind bei einem Progressiv-Verteiler gegeben, wie er aus dem DE-GM 73 32 009 bekannt ist, da auch dort gerade die Kanäle zwischen der ersten und der letzten Zylinderkammer sehr lange ausgebildet sind.

Auch der Progressiv-Verteiler gemäß der DE-OS 1 902 587 ist wegen der langen Kanäle mit den vorerwähnte Nachteilen behaftet.

Bei einem aus der DE-PS 29 17 863 bekannten Progressiv-Verteiler einer anderen Art wird versucht, die vorerwähnten Nachteile dadurch zu vermeiden, daß die einzelnen Zylinderkammern im Gehäuse des Progressiv-Verteilers räumlich so verteilt angeordnet sind, daß die Kanäle verhältnismäßig kurz und unter sich gleich lang gehalten werden können. Diese Art eines Progressiv-Verteilers ist jedoch in der Herstellung aufwendig und zusätzlich wegen der zwangsweise räumlich verteilten Abgabeauslässe hinsichtlich des Anschlusses weiterführender Leitungen nachteilig. Eine nachträgliche Änderung der Schmierstellenanzahl ist nicht möglich. Bei kleinen Dosiervolumina ist die Entlüftung der relativ großen Kanäle problematisch.

Aus dem DE-GM 84 13 228 ist ein Progressiv-Verteiler einer ebenfalls anderen Gattung bekannt, bei dem durch eine grosse Anzahl von Steuerkanten und Steuerkanälen nur eine einseitig gerichtete Durchströmung erreicht wird, bei dem die eingangs erwähnten Nachteile nur mehr abgeschwächt auftreten.

Aus der DE-OS 34 12 836 ist schließlich ein Progressiv-Verteiler bekannt, bei dem Ventile in den Abgabeauslässen das Rückströmen des bereits ausgepreßten Schmiermittels in den Progressiv-Verteiler verhindern. Die langen Kanäle im Progressiv-Verteiler führen jedoch zu den gleichen Nachteilen wie eingangs erwähnt.

Der Erfindung liegt die Aufgabe zugrunde, einen Progressiv-Verteiler der eingangs genannten Art zu schaffen, der trotz seines einfachen Aufbaus mit in einer Ebene liegenden Zylinderkammern der Nachteile der langen Kanäle entledigt ist.

Die gestellte Aufgabe wird erfindungsgemäß durch die im kennzeichnenden Teil des Patentanspruchs 1 angegebenen Merkmale gelöst.

Bei dieser Ausbildung können zwar die für den einfachen Aufbau mit den in einer Ebene liegenden Zylinderkammern notwendigen langen Kanäle weiterhin vorgesehen werden; jedoch ist die nachteilige Wirkung der langen Kanäle dadurch beseitigt, daß diese zumindest über einen überwiegenden Teil ihrer Länge in zwei Nebenkanäle aufgespalten und mit Absperrelementen versehen werden, so daß jeder der Nebenkanäle nur in jeweils einer Richtung durchströmt wird. Dadurch wird verhindert, daß dosiertes und in den Kanal gepreßtes Schmiermittel, selbst wenn Lufteinschlüsse vorhanden sind, sich in einem in beiden Richtungen durchströmbaren Kanal hin- und herbewegt ohne am zugehörigen Abgabeauslaß abgefördert zu werden. Durch die relative Nähe der Absperrelemente zum die Dosierkammer bildenden Endabschnitt der Zylinderkammer wird sichergestellt, daß zumindest ein großer Teil des aus der Dosierkammer ausgeschobenen Schmiermittelvolumens das in dieser Strömungsrichtung öffnende Absperrelement passiert und dann nicht mehr zur Dosierkammer zurückgedrückt werden kann, weil dann das Absperrelement schließt. Auf diese Weise werden auch Lufteinschlüsse sicher abgeführt und wird auch bei einem kleinen Dosiervolumen die zuverlässige Abgabe des Schmiermittels am zugeordneten Abgabeauslaß sichergestellt. Es kann bei einem Lufteinschluß zwar die Abgabe zunächst verzögert werden; nach einigen Takten tritt das Schmiermittel aber zuverlässig und in der vorgegebenen Dosierung aus. Dabei könnte jeder Kanal zwei Nebenkanäle mit Absperrelementen für den Vor- und Rücklauf aufweisen; in der Praxis reicht es jedoch aus, nur die längsten bzw. längeren Kanäle derart auszugestalten.

Eine weitere, vorteilhafte Ausführungsform geht aus Anspruch 2 hervor. Bei dieser Auslegung wird eine günstige Relation zwischen dem außerhalb der Dosierkammer vor den Absperrelementen vorliegenden Schmiermittelvolumen und dem in der Dosierkammer bereitgestellten Schmiermittelvolumen erreicht, mit der sichergestellt ist, daß der lange Kanal zuverlässig entlüftet und daß Schmiermittel nicht wirkungslos nur im Kanal hin- und herbewegt wird.

Alternativ ist auch eine Ausführungsform zweckmäßig, wie sie aus Anspruch 3 hervorgeht. Bei dieser Auslegung wird auch beim Rückfluß eine günstige Relation zwischen der im beidseitig durchflossenen Kanalstück vorhandenen Schmiermittelmenge und dem Volumen der zugeordneten Zylinderkammer erreicht.

Eine zweckmäßige Ausführungsform geht aus Anspruch 4 hervor. Federbeaufschlagte Rückschlagventile arbeiten lageunabhängig und zuverlässig. Ihr Öffnungsdruck läßt sich wünschenswert klein einstellen.

Eine weitere, zweckmäßige Ausführungsform geht aus Anspruch 5 hervor. Der Aufbau eines Progressiv-Verteilers aus scheibenförmigen Abschnitten ist üblich, um die Anzahl der Verteilerabschnitte sowie die verschiedenen Dosiervolumina verändern zu können. Mit der Anordnung der Nebenkanäle und der Absperrelemente wird unabhängig von der Anzahl der Verteilerabschnitte sichergestellt, daß das wirkungslose Hin- und Herfördern der dosierten Schmiermittelvolumina unterbleibt.

Zweckmäßig ist dabei auch das Merkmal von Anspruch 6, weil hierbei gegebenenfalls die anderen Verteilerabschnitte in herkömmlicher Weise ausgebildet und nur mit der speziell ausgebildeten Anschlußscheibe kombiniert werden können.

Eine andere, vorteilhafte Ausführungsform geht schließlich aus Anspruch 7 hervor. Hier sind die Nebenkanäle in Abschnitten in allen Verteilerabschnitten vorgesehen.

Anhand der Zeichnungen werden Ausführungsformen des Erfindungsgegenstandes erläutert. Es zeigen:

Fig. 1 einen schematischen Längschnitt durch einen Progressiv-Verteiler mit drei Verteilerabschnitten, und

Fig. 2 eine der Ausführungsform von Fig. 1 entsprechende Ausführungsform eines Progressiv-Verteilers, der aus wahlweise kombinierbaren, scheibenförmigem Elementen zusammengesetzt ist.

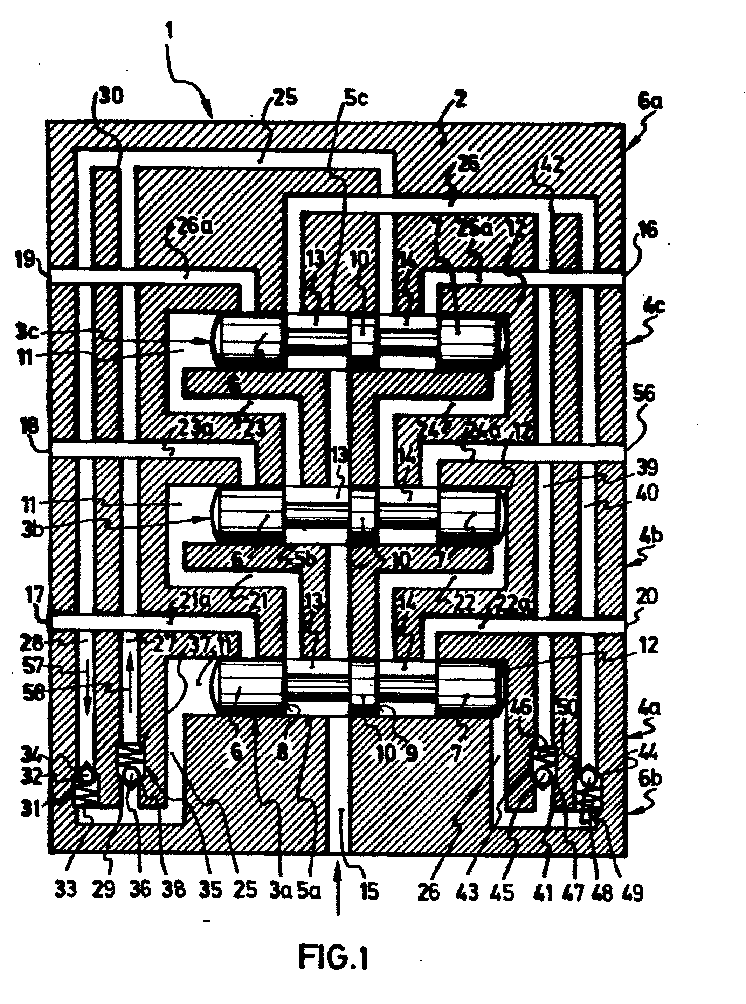

Ein Progressiv-Verteiler für Schmiermittel wie Öl oder Fett gemäß Fig. 1 besitzt ein quaderförmiges Gehäuse 2 mit drei übereinander liegenden Verteilerabschnitten 4a, 4b und 4c, die oben durch einen Abschlußabschnitt 6a und unten durch einen Anschlußabschnitt 6b ergänzt sind. In einer gemeinsamen Vertikalebene des Gehäuses 2 sind drei Zylinderkammern 5a,5b,5c mit Zwischenabständen angeordnet, deren jede einen Doppelkolben 3a,3b,3c enthält, der zwischen zwei Endlagen hin- und herverschiebbar gelagert ist. Der Progressiv-Verteiler 1 gemäß Fig. 1 könnte auch nur mit zwei Zylinderkammern oder mit einer beliebigen Anzahl, in der Praxis bis zu zwölf, ausgestattet sein.

Jeder Doppelkolben 3a,3b,3c besitzt einen linken und einen rechten Kolbenteil 6,7, zwischen denen zwei Steuernuten 8,9 und ein Mittelteil 10 ausgebildet sind. Jeder Doppelkolben 3a, 3b, 3c begrenzt in seiner Zylinderkammer 5a, 5b, 5c zwei Endabschnitte 11,12, die wechselseitig entweder eine Dosierkammer oder eine Steuerkammer oder eine Druckkammer bilden. Die Steuernuten 8,9 definieren je nach Lage des Doppelkolbens 3a,3b,3c zwei kreisringförmige Steuerabschnitte 13,14, die voneinander getrennt sind.

Von der Unterseite des Gehäuses führt ein mittiger Zufuhrkanal 15 zu den drei Zylinderkammern 5a,5b,5c, der - in der dargestellten Stellung der Doppelkolben 3a,3b,3c an alle Steuerkammern 13 angeschlossen ist.

An der Außenseite des Gehäuses 2 sind bei dieser Ausführungsform sechs Abgabeauslässe 16,17,18,19,20 und 56 vorgesehen, an die entweder nicht dargestellte Schmierstellenleitungen oder Leitungen zu weiteren Verteilern angeschlossen sind.

Dem Zufuhrkanal 15 wird in Pfeilrichtung mit einem vorbestimmten Druck und einer wählbaren und verstellbaren Fördermenge Schmiermittel kontinuierlich zugeführt.

Die einzelnen Zylinderkammern 5a,5b,5c sind untereinander durch Kanäle verbunden, von denen Kanalteile zu den jeweiligen Abgabeanschlüssen führen.

Von dem Endabschnitt 11 der Zylinderkammer 5b führt ein Kanal 21 zum Steuerabschnitt 13 der Zylinderkammer 5a. Dem Kanal 21 zugeordnet ist ein Kanalteil 21a zum Abgabeauslaß 17. Der Kanalteil 21a mündet in die Zylinderkammer 5a an einer Stelle, die in der dargestellten Lage des Doppelkolbens 3a durch den Kolbenteil 6 von dem Steuerabschnitt 13 abgesperrt ist. Vom rechten Endabschnitt 12 der Zylinderkammer 5b führt ein Kanal 22 zum Steuerabschnitt 14 der Zylinderkammer 5a, dem ein Kanalteil 22a zum Abgabeauslaß 20 zugeordnet ist und der in der dargestellten Stellung des Doppelkolbens 3a mit dem Steuerabschnitt 14 in Strömungsverbindung steht. Vom linken Endabschnitt 11 der Zylinderkammer 5b führt ein Kanal 23 zum Steuerabschnitt 13 der Zylinderkammer 5b, dem ein Kanalteil 23a zu einem Abgabeauslaß 18 zugeordnet ist. Vom rechten Endabschnitt 12 der Zylinderkammer 5c führt ein Kanal 24 zum Steuerabschnitt 14 der Zylinderkammer 5b, dem ein Kanalteil 24a zu einem Abgabeauslaß 56 zugeordnet ist. Vom linken Endabschnitt 11 der Zylinderkammer 5a führt ein langer Kanal 25 zum Steuerabschnitt 14 der Zylinderkammer 5c, dem ein Kanalteil 25a zu einem Abgabeauslaß 16 zugeordnet ist. Vom rechten Endabschnitt 12 der Zylinderkammer 5a führt schließlich ein langer Kanal 26 zum Steuerabschnitt 13 der Zylinderkammer 5c, dem ein Kanalteil 26a zu einem Abgabeauslaß 19 zugeordnet ist. Die Kanalteile 21a, 22a, 23a, 24a, 25a, 26a sind im wesentlichen gleich lang, wie auch die Kanäle 21, 22, 23 und 24. Nur die Kanäle 25 und 26 sind wesentlich länger, weil sie die erste und die letzte Zylinderkammer 5a, 5c in der Ebene miteinander verbinden.

Der Kanal 25 ist über einen wesentlichen Teil seiner Längserstreckung in zwei Nebenkanäle 27 und 28 aufgeteilt, die an einer Zweigstelle 29 verzweigt und an einer Zweigstelle 30 wieder miteinander verbunden sind. Desgleichen ist der Kanal 26 über einen Teil seiner Längserstreckung an einer Zweigstelle 41 beginnend in zwei Nebenkanäle 39,40 aufgezweigt, die sich an einer Zweigstelle 42 wieder vereinigen.

Nahe dem linken Endabschnitt 11 der Zylinderkammer 5a ist im Nebenkanal 28 des Kanals 25 ein Absperrelement 31 vorgesehen, das in einer Strömungsrichtung entgegengesetzt zu einem Pfeil 57 sperrt. Insbesondere ist dieses Absperrelement 31 ein Rückschlagventil mit einem Schließelement 32 in Kugelform, das durch eine Feder 33 gegen einen Sitz 34 gepreßt wird. Auch im Nebenkanal 27 ist ein Absperrelement 35 vorgesehen, das jedoch in der anderen Störmungsrichtung sperrt und in Richtung eines Pfeiles 58 öffnet. Das Absperrelement 35 ist wiede rum ein Rückschlagventil mit einem durch eine Feder 37 gegen einen Sitz 38 gepreßten Schließelement 36 in Kugelform. Auch in den Nebenkanälen 39,40 sind Absperrelemente 43,44 der gleichen Bauweise angeordnet, die mit Schließelementen 45,48, Sitzen 47,50 und Federn 49,46 ausgestattet sind, wobei diese beiden Absperrelemente 43,44 in zueinander entgegengesetzten Strömungsrichtungen sperren.

Der Progressiv-Verteiler 1 gemäß Fig. 1 arbeitet wie folgt: Ausgehend von den Positionen der Doppelkolben 3a, 3b,3c gemäß Fig. 1 steht das unter Druck über den Zuführkanal 15 zugeführte Schmiermittel in den Steuerabschnitten 13 der drei Zylinderkammern 5a,5b,5c an, wobei über die Kanäle 21,23 und 26 sowie den Nebenkanal 40 und das geöffnete Absperrelement 44 der Zufuhrdruck auch im rechten Endabschnitt 12 der Zylinderkammer 5a zu wirken beginnt. Im linken Endabschnitt 11 der Zylinderkammer 5a ist eine bestimmte Schmiermitteldosis im wesentlichen drucklos geborgen. Der Kanal 25 wie auch die Nebenkanäle 27,28 und der Kanalteil 25a und der Steuerabschnitt 14 sind mit Schmiermittel gefüllt. Die Doppelkolben 3b und 3c werden durch den Druck in den linken Endabschnitten 11 der Zylinderkammern 5b und 5c in den rechten Endlagen blockiert. Der Druck im rechten Endabschnitt 12 der Zylinderkammer 5a beginnt nun den Doppelkolben 3a in Fig.1 nach links zu verschieben. Das Schmiermittel aus dem als Dosierkammer dienenden Endabschnitt 11 der Zylinderkammer 5a wird zunehmend ausgepreßt und öffnet dabei das Absperrelement 35. Das Schmiermittel tritt in Richtung des Pfeiles 58 in den Nebenkanal 27 ein und wird im weiteren Verlauf über den oberen Teil des Kanals 25 in den Steuerabschnitt 14 und von diesem durch den Kanalteil 25a zum Abgabeauslaß 16 bewegt, wo es austritt. Bei der Bewegung des Doppelkolbens 3a nach links überfährt der Mittelteil 10 den Zuführkanal 15, so daß der Steuerabschnitt 13 vom Zuführkanal 15 abgetrennt und dafür der Steuerabschnitt 14 and den Zuführkanal 15 angeschlossen wird. Gleichzeitig wird der Kanalteil 21a mit dem Kanal 21 über den Steuerabschnitt 13 verbunden, während der Kanalteil 22a vom Kanal 22 durch den rechten Kolbenteil 7 des Doppelkolbens 3a abgetrennt wird. Somit ist die Blockierung des Doppelkolbens 3b aufgehoben und es kann der Druck im Endabschnitt 12 der Zylinderkammer 5b beginnen, den Doppelkolben 3b nach links zu verschieben. Das Schmiermittel wird aus dem linken Endabschnitt 11 der Zylinderkammer 5b durch den Kanal 21, den Steuerabschnitt 13 und den Kanalteil 21a zum Abgabeauslaß 17 gefördert. Der Doppelkolben 3a ist dabei über den Kanal 26 und dessen Nebenkanal 40 in seiner linken Endlage hydraulisch blokiert, wie auch der Doppelkolben 3b über den Kanal 22 in seiner linken Endlage blockiert wird, sobald das Schmiermittel aus dem Endabschnitt 11 der Zylinderkammer 5b ausgeschoben worden ist. Bei Der Verschiebebewegung des Doppelkolbens 3b ist der Steuerabschnitt 13 vom Zuführkanal 15 abgetrennt und dafür der Kanalteil 23a mit dem Steuerabschnitt 13 verbunden worden, während der Steuerabschnitt 14 der Zylinderkammer 5b vom Kanalteil 24a abgetrennt und mit dem Zufuhrkanal 15 verbunden worden ist. In weiterer Folge wird das Schmiermittel aus dem Steuerabschnitt 14 der Zylinderkammer 5b über den Kanal 24 in den rechten Endabschnitt 12 der Zylinderkammer 5c gedrückt, so daß der Doppelkolben 3c nach links verschoben wird und das Schmiermittel aus dem linken Endabschnitt 11 über den Kanal 23, den Steuerabschnitt 13 und den Kanalteil 23a zum Abgabeauslaß 18 fördert. Dabei wird der Steuerabschnitt 13 der Zylinderkammer 5c vom Zufuhrkanal 15 abgetrennt und mit dem Kanalteil 26a verbunden, während der Kanalteil 25a zum Steuerabschnitt 14 abgetrennt und der Steuerabschnitt 14 mit dem Zufuhrkanal 15 verbunden wird. Dadurch ist die hydraulische Blockierung des Doppelkolbens 3a in seiner linken Endlage aufgehoben. Das Schmiermittel aus dem Zufuhrkanal 15 wird über den Steuerabschnitt 14 der Zylinderkammer 5c in den Kanal 25 und über den Nebenkanal 28 und das öffnende Absperrelement 31 zum linken Endabschnitt 11 der Zylinderkammer 5a gedrückt, worauf es den Doppelkolben 3a wieder in seine rechte und in Fig. 1 gezeigte Endlage verschiebt, wobei dieser mit seinem Kolbenteil 7 das im Endabschnitt 12 enthaltene Schmiermittel über den Kanal 26 und das dann öffnende Absperrelement 43 in den Nebenkanal 39 und in den Steuerabschnitt 13 der Zylinderkammer 5c drückt, von wo es über den Kanalteil 26a zum Abgabeauslaß 19 gefördert wird. Dabei wird die hydraulische Blockierung des Doppelkolbens 3b aufghoben und in weiterer Folge über den Kanal 21 der linke Endabschnitt 11 der Zylinderkammer 5b mit Druck beaufschlagt, so daß der Doppelkolben 3b in seine rechte in Fig. 1 gezeichnete Endlage verschoben wird und das Schmiermittel über den Kanal 22, den Steuerabschnitt 14 und den Kanalteil 22a zum Abgabeauslaß 20 fördert. Bei dieser Bewegung wird der Steuerabschnitt 13 der Zylinderkammer 5b wieder mit dem Zufuhrkanal 15 verbunden und die hydraulische Blockierung des Doppelkolbens 3c aufgehoben. In weiterer Folge wird dann über den Kanal 23 der linke Endabschnitt 11 der Zylinderkammer 5c mit Druck beaufschlagt und der Doppelkolben 3c nach rechts in seine in Fig. 1 gezeichnete Endlage verschoben, wobei er das Schmiermittel aus dem letzten Endabschnitt 12 über der Kanal 24, den Steuerabschnitt 14 und den Kanalteil 24a zum Abgabeauslaß 56 fördert. Danach liegen wieder die in Fig. 1 dargestellten Verhältnisse vor, bei denen eine neue Reihe von sechs Abgabetakten beginnt.

Es liegt auf der Hand, daß mehrere der Abgabeauslässe auch zusammengefaßt werden könnten. Solange im Zufuhrkanal 15 Schmiermittel zugeführt wird, verteilt der Progressiv-Verteiler 1 Schmiermittel in der vorgegebenen Relation, wobei mit zunehmender Fördermenge im Zufuhrkanal 15 auch die an den Abgabeauslässen abgegebenen Schmiermitteldosen progressiv anwachsen.

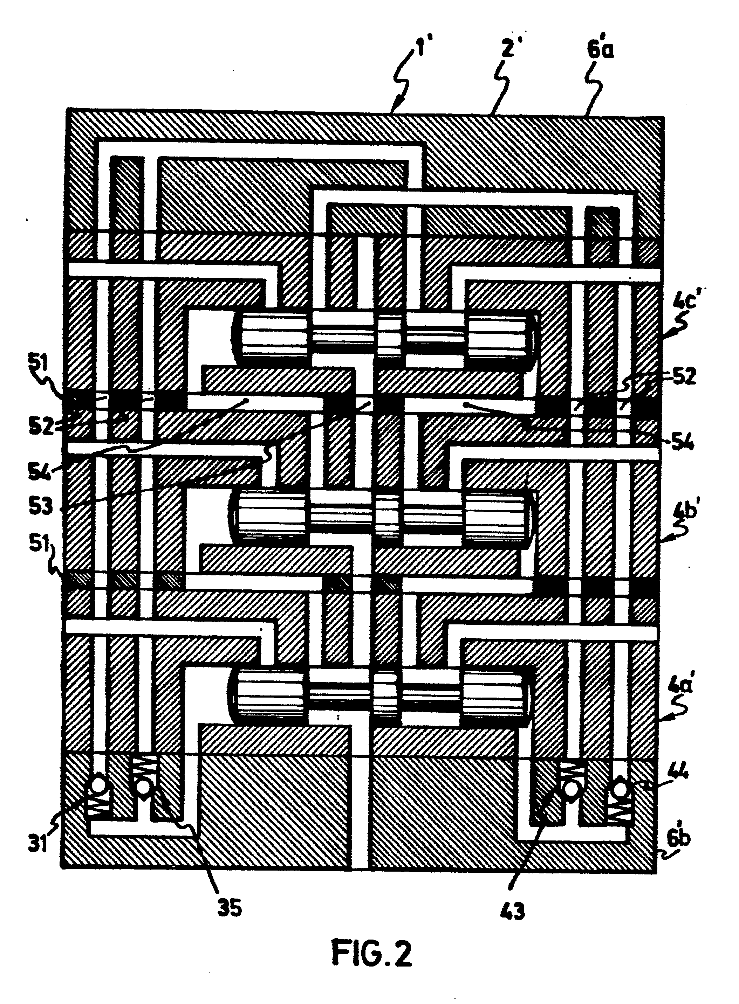

Die Ausführungsform eines Progressiv-Verteilers 1' gemäß Fig. 2 unterscheidet sich nur in der Ausbildung von der Ausführungsform gemäß Fig. 1. Die Funktion ist die gleiche. Der Progressiv-Verteiler 1' gemäß Fig. 2 ist aus mehreren Scheiben zusammengesetzt, die wahlweise, z.B. zum Verändern der Dosen, miteinander kombinierbar sind. Die einzelnen Verteilerabschnitte 4a',4b',4c' bilden Scheiben, die unter Vermittlung von Zwischenplatten 51 mit zueinander passenden Anschlußbildern aneinandergesetzt sind, wobei die Zwischenplatten 51 Bohrungen 52, 53 und Schlitze 54 enthalten, die die Durchgänge durch die einzelnen Kanäle herstellen. Oben wird das Gehäuse 2' des Progressiv-Verteilers 1' durch eine Abschlußscheibe 6a' abgeschlossen, in der Kanalteile enthalten sind. Unten wird das Gehäuse 2' hingegen durch eine Anschlußscheibe 6b' abgeschlossen, die die Absperrelemente 31,35 und 43,44 enthält.

Die Erfindung ist nicht auf die beschriebenen und gezeichneten Ausführungsbeispiele beschränkt. So kann im Rahmen der konstruktiven Gegebenheiten das Volumen der Kanäle und Kanalteile, die beidseitig durchströmt werden, auf ein Minimum reduziert werden. Dies ist beispielsweise möglich, wenn die Absperrelemente 31,35 bzw. 43,44 direkt am zugeordneten Endabschnitt 11 bzw. 12 angeordnet werden, Weiterhin können auch die Zweigstellen 30,42 unmittelbar benachbart der zugeordneten Steuerkammern 13, 14 der Zylinderkammer 5c angeordnet werden.

## Patentansprüche

1. Progressiv-Verteiler (1, 1') für Schmiermittel, das unter Druck zugeführt und in aufeinanderfolgenden Takten dosiert an wenigstens einen Abgabeauslaß abgegeben wird, mit mindestens einem ersten und einem letzten, jeweils eine Zylinderkammer (5a, 5b, 5c) aufweisenden Verteilerabschnitt (4a, 4b, 4c, 6a, 6b, 4a', 4b', 6a', 6b'), mit einem in jeder Zylinderkammer zwischen zwei Endlagen vom Schmiermitteldruck hin- und herschiebbaren, linke und rechte Kolbenteile (6, 7) mit einem über kreisringförmige Steuerabschnitte (13, 14) davon getrennten Mittelteil (10) aufweisenden Doppelkolben (3a, 3b, 3c), mit einem Zuführkanal (15) zu den Mittelbereichen der in einer gemeinsamen Ebene des Verteilers angeordneten Zylinderkammern, und mit die Zylinderkammern (5a, 5b, 5c) in jeweils gleicher Weise verbindenden, paarweisen Kanälen (21, 22; 23, 24; 25, 26), die das Schmiermittel in beiden Richtungen abwechselnd durchströmt, und von denen jeweils ein Kanal eines Kanalpaares (21, 22; 23, 24; 25, 26) vom einen Endabschnitt (11, 12) einer Zylinderkammer (5a, 5b, 5c) zum Mittelbereich der in der gemeinsamen Ebene benachbarten Zylinderkammer führt, in der der Mittelteil (10) des Doppelkolbens (3a, 3b, 3c) eine Verbindung vom einen Kanal des Kanalpaares zum Zuführkanal (15) offen hält und den anderen Kanal des Kanalpaares vom Zuführkanal (15) abtrennt, wobei die paarweise die erste und die letzte Zylinderkammer (5a, 5c) im ersten und im letzten Verteilerabschnitt (4a, 4c; 4a', 4c') verbindenden Kanäle (25, 26) länger sind als die direkt benachbarte Zylinderkammern (5a, 5b; 5b, 5c) verbindenden Kanäle (21, 22; 23, 24), und mit zwei aus jeder Zylinderkammer (5a, 5b, 5c) zwischen einem Endabschnitt (11, 12) und dem Mittelbereich abzweigenden, zu Abgabeauslässen (16 bis 20, 56) führenden Kanalteilen (21a bis 26a), deren jeder in einer Endlage des Doppelkolbens (3a, 3b, 3c) durch einen Steuerabschnitt (13, 14) des Doppelkolbens (3a, 3b, 3c) mit dem an den Mittelbereich dieser Zylinderkammer angeschlossenen, gerade vom Zuführkanal (15) abgetrennten Kanal (21 bis 26) verbunden ist, wobei die Endabschnitte (11, 12) jeder Zylinderkammer abwechselnd als Steuerkammer für die Beaufschlagung des Doppelkolbens und als Dosierkammer für das Schmiermittel dienen, das durch die Verschiebung jedes Doppelkolbens über den Kanal (21 bis 26) zum Mittelabschnitt der nächsten Zylinderkammer (5a, 5b, 5c) und über den dort freigegebenen Kanalteil (21a bis 26a) ausgeschoben wird, dadurch gekennzeichnet, daß von den Kanälen (21 bis 26) der Kanalpaare zumindest jeder die erste Zylinderkammer (5a) mit der letzten Zylinderkammer (5c) in der gemeinsamen Ebene der Zylinderkammern verbindende längere Kanal (25, 26) wenigstens über einen Teil seiner Längserstreckung aus zwei nebeneinanderliegenden Nebenkanälen (27, 28; 39, 40) besteht, und daß in beiden Nebenkanälen in zueinander entgegengesetzten Strömungsrichtungen sperrende Absperrelemente (31, 35, 43, 44) nahe beim oder am jeweiligen Endabschnitt (11, 12) der Zylinderkammer (5a) vorgesehen sind.

2. Progressiv-Verteiler nach Anspruch 1, dadurch gekennzeichnet, daß der Kanal (25,26) nahe beim Endabschnitt (11,12) der Zylinderkammer (5a) in die Nebenkanäle (27,28;39,40) verzweigt ist (bei (29,41), und daß die Summe der Volumina des Kanals (25,26) zwischen der Dosierkammer und der Zweigstelle (29,41) sowie der beiden Nebenkanäle (27,28;39,40) bis zu den Absperrelementen (31,35,43,44) kleiner als das Dosiervolumen des die Dosierkammer bildenden Endabschnitts (11,12) ist.

3. Progressiv-Verteiler nach einem der Ansprüche 1 oder 2, dadurch gekennzeichnet, daß sich die Nebenkanäle (27,28;39,40) an einer Zweigstelle (30,42) nahe der anderen mit dem Kanal (25,26) verbundenen Zylinderkammer (5c) vereinigen, wobei das Volumen des Kanals (25,26) zwischen dem mit dem Kanal (25,26) verbundenen eine Steuerkammer (13,14) bildenden Teil der Zylinderkammer(15) und der Zweigstelle (30,42) kleiner ist, als das Volumen der Steuerkammer (13,14).

4. Progressiv-Verteiler nach einem der Ansprüche 1 bis 3, dadurch gekennzeichnet, daß die Absperrelemente (31,35;43,44) Rückschlagventile mit in Sperrichtung gegen einen Sitz (34,38;47,50) federbeaufschlagten Schließelementen (32,36;45,48) sind.

5. Progressiv-Verteiler nach wenigstens einem der Ansprüche 1 bis 4, dadurch gekennzeichnet, daß die Verteilerabschnitte (4a',4b',4c') scheibenförmig und mit zueinander passenden Anschlußbildern der Kanäle ausgebildet und vorzugsweise zwischen eine Abschlußscheibe (6a') und eine Anschlußscheibe (6b',6b'',6b''') mit passenden Anschlußbildern eingeordnet sind.

6. Progressiv-Verteiler nach Anspruch 5, dadurch gekennzeichnet, daß die Absperrelemente (31,35,43,44) in der Anschlußscheibe (6b', 6b'',6b''') untergebracht sind.

7. Progressiv-Verteiler nach wenigstens einem der Ansprüche 1 bis 6, **dadurch gekennzeichnet,** daß die Nebenkanäle (27,28;39,40) von der Anschlußscheibe (6b') ausgehend alle vorgesehenen Verteilerabschnittscheiben (4a',4b',4c') bis in die Anschlußscheibe (6a') durchsetzen und sich in der Abschlußscheibe (6a') vereinigen.

**Claims**

1. Progressive Distributor (1, 1') for lubricants which are supplied under pressure, apportioned in successive cycles and delivered to at least one dispensing outlet; with at least a first and a last distributing section (4a, 4b, 4c, 6a, 6b, 4a', 4b', 6a', 6b') including each one cylinder chamber (5a, 5b, 5c); with a double piston (3a, 3b, 3c) which includes a middle section (10) which is separated by circular control region (13, 14) from left and right piston sections (6, 7) which can be pushed back and forth in each cylinder chamber between two end positions by the lubricant's pressure; with a supply channel (15) to the middle areas of the cylinder chambers, disposed in a common plane with the distributor; and with paired channesl (21, 22; 23, 24; 25, 26), which each connect the cylinder chambers (5a, 5b, 5c) in the same manner and which are passed through by the lubricant alternately in both directions, and of which each one of the paired channels (21, 22; 23, 24; 25, 26) leads from one end section (11, 12) of a cylinder chamber (5a, 5b, 5c) to the middle region of the adjacent cylinder chamber in the same plane, in which region the middle section (10) of the double piston (3a, 3b, 3c) maintains an open link from one of the paired channels to the supply channel (15) and separates the other paired channel from the supply channel (15), whereby the channels (25, 26), which connect in pairs the first and the last cylinder chamber (5a, 5b) in the first and in the last distribution section (4a, 4c; 4a', 4c'), are longer than the channels (21, 22; 23, 24), which connect the adjacent cylinder chambers (5a, 5b; 5b, 5c); and with two channel sections (21a to 26a), which branch off from every cylinder chamber (5a, 5b, 5c) between an end section (11, 12) and the middle region and lead to dispensing outlets (16 to 20, 56), with each section in an end position of the double piston (3a, 3b, 3c) being connected by a control section (13, 14) of the double piston (3a, 3b, 3c) with the channel (21 to 26), which is connected with the middle region of this cylinder chamber which had just been separated from the supply channel (15); whereby the end sections (11, 12) of each cylinder chamber alternately serve as control chamber for the activation of the double piston and as apportioning chamber of the lubricant which is ejected by displacement of each double piston via the channel (21 to 26) to he middle section of the next cylinder chamber (5a, 5b, 5c) and via the thereat released channel section (21a to 26a), characterised in that of the channels (21 to 26) of the paired channels at least each longer channel (25, 26), connecting the first cylinder chamber (5a) with the last cylinder chamber (5c) in the common plane of the cylinder chambers, consists in at least part of its longitudinal extent of two adjacent side channels (27, 28; 39, 40); and that in both side channels closing elements (31, 35, 43, 44), which close in opposing flow directions to each other, are provided near to or in the respective end section (11, 12) of the cylinder chamber (5a).

2. Progressive Distributor according to claim 1, characterised in that the channel (25, 26) branches off (at 29, 41) near the end section (11, 12) of the cylinder chamber (5a) into the side channels (27, 28; 39, 40), and that the sum of the volumes of the channel (25, 26) between the apportioning chamber and the branch location (29, 41) as well as the two side channels (27, 28; 39, 40) up to the closing elements (31, 35, 43, 44) is smaller than the apportioning volume of the end section (11, 12) which forms the apportioning chamber.

3. Progressive Distributor according to one of the claims 1 or 2, characterised in that the side channels (27, 28; 39, 40) join with each other at a branch location (30, 42) near the other cylinder chamber, which is connected with the channel (25, 26), whereby the volume of the channel (25, 26) between the part of the cylinder chamber (15), which together with the channel (25, 26) forms a control chamber (13, 14), and the branch location (30, 42) is smaller than the volume in the control chamber (13, 14).

4. Progressive Distributor according to one of the claims 1 to 3, characterised in that the closing elements (31, 35; 43, 44) are check-valves with valve-elements springloaded against a seat (34, 38, 47, 50) whilst in the sealing direction.

5. Progressive Distributor according to at least one of the claims 1 to 4, characterised in that the distributor sections (4a', 4b', 4c') are disc-shaped and constructed to have matching connecting shapes of the channels and that they are preferably fitted between a covering disc (6a') and a communication disc (6b', 6b'', 6b''') with fitting communication pattern.

6. Progressive Distributor according to claim 5, characterised in that the closing elements (31, 35, 43, 44) are accommodated in the communication disc (6b', 6b'', 6b''').

7. Progressive Distributor according to at least one of the claims 1 to 6, characterised in that the side channels (27, 28; 39, 40), starting from the disc (6b'), pass all provided distributor-section discs (4a', 4b', 4c') up to the covering disc (6a'), and that they loin in the covering disc (6a').

**Revendications**

1. Distributeur progressif (1, 1'), pour lubrifiant introduit sous pression et dosé par périodes successives, à travers au moins une sortie de distribution, avec au moins un premier et un dernier segment de distribution (4a, 4b, 4c, 6a, 6b, 4a', 4b', 6a', 6b'), comportant chacun une chambre cylindrique (5a, 5b, 5c), avec un double piston (3a, 3b, 3c) présentant, dans chaque chambre cylindrique, des parties de piston (6, 7) gauche et droite, coulissant en va-et-vient entre deux positions terminales sous l'action de la pression du lubrifiant, avec une partie centrale (10) séparée de celles-ci par des segments de commande circulaires (13, 14), avec un conduit d'alimentation (15) arrivant dans la zone centrale des chambres cylindriques disposées dans un plan commun du distributeur, et avec des paires de conduits (21, 22; 23, 24; 25, 26) reliant toujours de la même manière les chambres cylindriques (5a, 5b, 5c), traversés par le lubrifiant dans les deux sens, de façon alternée, et dont chaque fois un conduit d'une paire de conduits (21, 22; 23, 24; 25, 26) mène, d'un segment terminal (11, 12) d'une chambre cylindrique (5a, 5b, 5c), a la zone centrale de la chambre cylindrique contigue dans le même plan, dans lequel la partie centrale (10) du double piston (3a, 3b, 3c) maintient à l'état ouvert une liaison entre un des conduits de la paire de conduits et le conduit d'alimentation (15) et sépare l'autre conduit de la paire de conduits du conduit d'alimentation (15), les conduits (25, 26), reliant par paires les première et dernière chambres cylindriques (5a, 5c) dans les premier et dernier segments de distribution (4a, 4c; 4a', 4c'), étant plus longs que les conduits (21, 22; 23, 24) reliant les chambres cylindriques (5a, 5b; 5b, 5c) directement voisines; et avec deux parties de conduit (21a, à 26a) menant, à partir de chaque chambre cylindrique (5a, 5b, 5c), aux sorties de distribution (16 à 20, 56), et présentant une bifurcation entre un segment terminal (11, 12) et la zone centrale, chacune de ces parties de conduit étant reliée, dans une position terminale du double piston (3a, 3b, 3c), par l'intermédiaire d'un segment de commande (13, 14) du double piston (3a, 3b, 3c), avec un conduit (21 à 26) séparé du conduit d'alimentation (15), raccordé à la zone centrale de cette chambre cylindrique, les segments terminaux (11, 12) de chaque chambre cylindrique servant alternativement commue chambre de commande pour l'alimentation du double piston et comme chambre d'alimentation pour le lubrifiant, qui est expulsé par le déplacement de chaque double piston à travers un conduit (21 à 26) jusqu'au segment central de la chambre cylindrique suivante (5a, 5b, 5c) et à travers la partie de conduit (21a à 26a) libérée à cet endroit, caractérisé en ce que parmi les conduits (21 à 26) des paires de conduits, au moins chaque conduit plus long (25, 26), reliant la première chambre cylindrique (5a) à la dernière chambre cylindrique (5c), dans le plan commun des chambres cylindriques, est constitué, au moins sur une partie de sa longueur, par deux conduits secondaires (27, 28; 39, 40) situés l'un à cote de l'autre, et que dans chaque conduit secondaire se trouvent disposes, suivant des sens d'écoulement opposés, des éléments d'arrêt (31, 35, 43, 44) de blocage, à proximité de, ou dans, chaque segment terminal (11, 12) de la chambre cylindrique (5a).

2. Distributeur progressif selon la revendication 1, caractérisé en ce que le conduit (25, 26) se sépare, à proximité des segments terminaux (11, 12) de la chambre cylindrique (5a), en conduits secondaires (27, 28; 39, 40) (en 29, 41), et que la somme des volumes des conduits (25, 26) entre la chambre d'alimentation et le point de bifurcation (29, 41) ainsi que des deux conduits secondaires (27, 28; 39, 40) jusqu'aux éléments d'arrêt (31, 35, 43, 44) est inférieure au volume d'alimentation des segments terminaux (11, 12) constituant la chambre d'alimentation.

3. Distributeur progressif selon la revendication 1 ou 2, caractérisé en ce que les conduits secondaires (27, 28; 39, 40) se réunissent en un point de bifurcation (30, 42) à proximité de l'autre chambre cylindrique (5c) relié au conduit (25, 26), le volume des conduits (25, 26) entre la partie de la chambre cylindrique (15) constituant une chambre de commande (13, 14), reliée au conduit (25, 26), et le point de bifurcation (30, 42), étant inférieur au volume de la chambre de commande (13, 14).

4. Distributeur progressif selon l'une quelconque des revendications 1 à 3, caractérisé en ce que les éléments d'arrêt (31, 35; 43, 44) sont des clapets anti-retour avec des éléments d'obturation (32, 36; 45, 48) soumis à l'action d'un ressort les poussant contre un siège (34, 38, 47, 50) dans le sens du blocage.

5. Distributeur progressif selon au moins l'une des revendications 1 à 4, caractérisé en ce que les segments de distribution (4a', 4b', 4c') sont conçus sous forme de disque, et avec des raccords de conduits ajustés entre eux, et de préférence, sont disposés entre un disque de couverture (6a) et un disque de jonction (6b', 6b'', 6b'''), avec des embranchements ajustés.

6. Distributeur progressif selon la revendication 5, caractérisé en ce que les éléments d'arrêt (31, 35, 43, 44) sont disposés dans le disque de jonction (6b', 6b'', 6b''').

7. Distributeur progressif selon au moins l'une des revendications 1 à 6, caractérisé en ce que les conduits secondaires (27, 28; 39, 40) traversent, à partir du disque de jonction (6b'), tous les segments de distribution prévus (4a', 4b', 4c'), jusqu'au disque de couverture (6a'), et se réunissent dans le disque de couverture (6a).

FIG.1

**FIG.2**